# EUROPEAN PATENT SPECIFICATION

(11) **EP 3 953 251 B1**
(45) Date of publication and mention of the grant of the patent: **18.09.2024**
(21) Application number: 19725403.0
(22) Date of filing: 11.04.2019
(51) Int. Cl.: B64C 1/22, B64D 9/00, B64D 37/08, B64D 27/02

(54) **CONFORMAL ENERGY BAY**
KONFORME ENERGIEBUCHT
BAIE D'ÉNERGIE CONFORME

(43) Date of publication of application: 16.02.2022
(60) Divisional application: 24182964.7
(73) Proprietor: PILATUS FLUGZEUGWERKE AG, 6370 Stans (CH)
(72) Inventor: CERVIA, Bruno, 6374 Buochs (CH)
(74) Representative: Linhart, Friedrich Karl Eberhard
(86) International application number: PCT/IB2019/052988
(87) International publication number: WO 2020/208402

(56) References cited:
- GB-A- 2 326 863
- US-A1- 2008 184 906
- US-A1- 2016 244 172
- US-A1- 2018 273 158
- US-A1- 2019 055 021

## Description

### Technical field

The invention relates to an aircraft system according to the preamble of claim 1. Furthermore, the invention relates to an energy module and an aircraft system according to the co-ordinate claims.

### Background art

Most aircraft nowadays use conventional jet fuel, for example kerosene, for powering their engines. However, more advanced aircraft can at least partly be powered by other energy sources such as batteries or hydrogen and might also comprise other engine types than combustion engines, for example electric motors. Turbo-electric propulsion, for example fully turbo-electric propulsion or partially turbo-electric propulsion, and hybrid electric propulsion are only some possible options for supplying the aircraft engines and other energy-dependent aircraft systems with energy.

Document US 2018/273158 A1 discloses a modular unmanned aerial system (UAS) with interchangeable lift generation systems and/or modules, while a fuselage has a bay underneath for receiving a power unit which can be either a rechargeable battery or a fuel tank. Document US 2019/055021 A1 discloses an aircraft having one or more modular bays each adapted to receive a payload module selected from a group of two or more interchangeable payload modules including an aerial refuelling module.

Such more complex aircraft power systems can - depending on their use - have certain advantages, such as improved efficiency, better sustainability and higher flexibility. On the other hand, one disadvantage which has to be overcome in order to make the most out of this potential higher flexibility, is to find appropriate ways for supplying the needed energy to such complex aircraft power systems.

### Disclosure of the invention

It is the object of the invention to overcome or to at least diminish the above-mentioned disadvantages.

This problem is solved by an aircraft system according to claim 1 comprising an aircraft with at least one bay for receiving different types of standardized modules, wherein the bay is configured to receive at least two different types of energy modules as standardized modules. In this context, the expression "bay" refers to a cavity in the fuselage of the aircraft or in a wing of the aircraft. In typical embodiments, the bay comprises a bay door, which is configured to be opened up for inserting a standardized module into the bay and to be closed once the standardized module is inserted in the bay. However, it is not mandatory for the bay to comprise a bay door. One possible alternative is that the standardized modules are designed such that their respective lower surfaces are configured to close flush with the adjacent structure, in particular for example configured to close a gap and/or groove between the standardized module on one hand and the adjacent structure and/or the exterior shell of the aircraft on the other hand, when the standardized module is inserted in the bay. The expression "standardized module" is typically to be understood as a module having a standardized geometrical form and/or standardized dimensions, such as to fit into the bay. The expression "energy module" refers to a particular type of standardized module, namely a module that is configured to participate in supplying the aircraft with energy. The expression "configured to receive" is to be understood such that the bay for example has dimensions such that the standardized modules can fit into the bay and/or such that the bay comprises holding means for safely holding the standardized module inside the bay and/or such that the bay comprises connection means for connecting one or more interface(s) of the energy module(s) to an aircraft energy supply system.

The invention is based on the understanding that the flexibility of aircraft can be improved if the aircraft can carry different types of energy modules depending on which type of flight and/or mission the aircraft is supposed to carry out. For example, in cases where the aircraft is supposed to carry out a mission during which it is important that the aircraft can run as long as possible on conventional fuel, it might make sense to insert an additional fuel tank as energy module into the bay. On the other hand, in cases where a larger amount of electrical energy will be needed during a flight, it might make sense to insert a battery module as energy module into the bay for that particular mission. Therefore, by configuring the bay such that it can receive at least two different types of energy modules as standardized modules, a first energy module comprising a conventional fuel tank and a second energy module comprising a battery, the flexibility of energy management inside the plane will be improved.

In a typical embodiment, additional energy modules are chosen from the following group of energy modules: a conventional fuel tank, a battery, a fuel tank for a fuel cell, a tank for electrofuel, a tank for nano-electrofuel, a gas tank and/or a compact energy source.

In the context of the present invention, the expression "conventional fuel tank" typically relates to a reservoir which can hold a certain amount of aircraft fuel, such as kerosene. The expression "battery" typically relates to a rechargeable battery which is configured to store energy in electrochemical form and to therefrom supply energy in electrical form. An example for such a battery is a lithium ion battery, but any other types of batteries, in particular batteries which are typically used for powering electric vehicles, are possible options. In the context of the present invention, the expression "fuel tank for a fuel cell" typically relates to a reservoir which is configured to hold a combustion fuel for a fuel cell, such as hydrogen or any type of liquid hydrocarbon, such as methane, methanol or ethanol. The expression "electrofuel" typically relates to a synthetic fuel, typically produced by storing electrical energy from renewable sources in the chemical bonds of liquid or gas fuels. The expression "tank for nano-electrofuel" typically relates to a reservoir configured to hold a nano-electrofuel, also referred to as NEF. In the context of the present invention, a "gas tank" is a reservoir that is configured to hold any type of gas, for example gas in liquid form and/or gas in gaseous form, preferably compressed. In the context of the present invention, a "compact energy source" is to be understood as any system, which is configured to supply energy in any form to the aircraft. A compact energy source can for example be an arrangement which fits into the bay and which is configured to supply electric energy to the aircraft. In typical embodiments, the compact energy source is a fuel cell system, in particular comprising typical fuel cell elements as well as a fuel reservoir integrated in the compact energy source. In typical embodiments, the compact energy source is a flow battery system, in particular comprising a flow battery with an anode and a cathode as well as a reservoir for electrofuel, in particular nano-electrofuel. In typical embodiments, the reservoir for electrofuel comprises a charged-fuel-compartment and a discharged-fuel-compartment.

In the context of the present invention, "chosen from the following group of energy modules" means that the additional energy modules can comprise any combination of the mentioned types of energy modules, for example
- a conventional fuel tank and a battery, or
- a battery and a gas tank, or
- a tank for nano-electrofuel and a compact energy source.

Furthermore, in typical embodiments, the bay is configured to receive more than two and/or all of the different types of energy modules in an interchangeable manner. In typical embodiments, the bay is configured to receive more than two and/or all of the types of energy modules described in the present disclosure of the invention and/or in the following description of preferred embodiments in an interchangeable manner. In typical embodiments, the bay is configured to receive a conventional fuel tank and/or a battery and/or a fuel tank for a fuel cell and/or a tank for electrofuel and/or a tank for nano-electrofuel and/or a gas tank and/or a compact energy source in an interchangeable manner. In this context, the expression "interchangeable manner" shall for example be understood such that different types of energy modules can be inserted into and removed from the bay(s) such as to make it possible to select most appropriate energy modules depending on a desired aircraft configuration and/or a desired aircraft performance.

In typical embodiments, the bay is configured to receive more than one energy module at a time, for example two energy modules at a time and/or three energy modules at a time and/or four or more energy modules at a time. This has the advantage of making the supply of the aircraft with energy even more flexible.

In typical embodiments, the bay is unpressurized. This has the advantage of making the configuration of the bay simple because no technical steps for pressurisation of the bay have to be foreseen. Furthermore, the fact that the bay is unpressurized is advantageous because less legal regulations will apply to the bay.

In typical embodiments, at least one bay is located in and/or arranged around a centre of gravity of the aircraft. Arranging the bay in or around a centre of gravity of the aircraft has the advantage of limiting the influence of an energy module charged into the bay on the flight stability to a minimum. In other words: by putting the bay in the vicinity of the centre of gravity of the aircraft, the flight characteristics of the aircraft will be influenced minimally, in a neglectable manner or not at all. In typical embodiments, the bay is arranged in particular directly between the wings of the aircraft.

In typical embodiments, at least one bay is arranged at least partly inside a wing of the aircraft. In particular embodiments, the aircraft comprises a multitude of bays, wherein at least one bay is at least partly integrated in a fuselage of the aircraft and/or wherein at least one bay is at least partly integrated in a wing of the aircraft, preferably in each wing of the aircraft.

In typical embodiments, the aircraft is an airplane, preferably an airplane with a length of less than 40 metres, typically with a length of less than 30 metres, particularly with a length of less than 20 metres. Energy management will be an issue especially in aircraft with such dimensions, and therefore foreseeing the bay in such airplanes will be particularly advantageous.

In typical embodiments, the bay has a volume between 400 litres and 100 litres, preferably between 300 litres and 200 litres, more preferably of approximately 250 litres. Such dimensions of the bay will be particularly advantageous because they will offer a good trade-off between the influence of the bay, in particular the charged bay, on the flight characteristics of the aircraft on one hand and the positive influence on the energy management performances and the flexibility of the aircraft on the other hand.

In typical embodiments, the bay is accessible from the bottom of the aircraft. This has the advantage of making it possible to easily access the bay and for example swap energy modules from below the aircraft, in particular when the aircraft is grounded. However, it would also be possible to install the bay such that it can be accessed from other directions, for example from behind the aircraft or from besides the aircraft or from above the aircraft.

In typical embodiments, all bays have essentially the same characteristics. In typical embodiments, the bays differ essentially exclusively in terms of their position in the aircraft fuselage and/or the aircraft wings. In principle, what is said about one bay of the aircraft in the present description can thus in principle also apply to some or all of the other bays of the aircraft. In this regard (and throughout this description), the term "essentially" shall mean that small deviations, for example in the range of 20%, 15% or 10%, are acceptable.

In typical embodiments, the aircraft comprises a propulsion fan with an electric motor, in particular a rim-driven electric motor. In typical embodiments, the electric motor is configured to be at least partly powered by electric energy, preferably at least partly supplied to the aircraft by means of an energy module placed inside the bay. In typical embodiments, the propulsion fan is configured to be powered by electric energy produced by means of a nano-electrofuel, preferably at least partly supplied to the aircraft by means of a nano-electrofuel tank. In typical embodiments, the propulsion fan comprises a multitude of propeller blades, mounted directly on the rim. In typical embodiments, the aircraft comprises a multitude of such propulsion fans.

The energy modules of the aircraft system according to the invention are configured to be charged into the bay of the aircraft. In typical embodiments, an additional the- energy module comprises a conventional fuel tank and/or a battery and/or a fuel tank for a fuel cell and/or a tank for electrofuel and/or a tank for nano-electrofuel and/or a gas tank and/or a compact energy source. In typical embodiments, the energy module is a combined module which combines one or more of the described energy modules in one module.

In typical embodiments, the tank for nano-electrofuel comprises a first reservoir for an anode-nano-electrofuel and a second reservoir for a cathode-nano-electrofuel. In typical embodiments, the first reservoir comprises a charged-anode-nano-electrofuel-compartment and a discharged-anode-nano-electrofuel-compartment. In typical embodiments, the second reservoir comprises a charged-cathode-nano-electrofuel-compartment and a discharged-cathode-nano-electrofuel-compartment.

In typical embodiments, the compact energy source is a fuel cell system, in particular comprising all typical fuel cell elements as well as a fuel reservoir integrated in the compact energy source. In typical embodiments, the compact energy source is a flow battery system, in particular comprising a flow battery with an anode and a cathode as well as an integrated tank for electrofuel, in particular nano-electrofuel. In typical embodiments, the integrated tank comprises a first reservoir for an anode-electrofuel and a second reservoir for a cathode-electrofuel. In typical embodiments, the first reservoir comprises a charged-anode-electrofuel-compartment and a discharged-anode-electrofuel-compartment. In typical embodiments, the second reservoir comprises a charged-cathode-electrofuel-compartment and a discharged-cathode-electrofuel-compartment.

### Short description of figures

In the following, the invention is described in detail by means of drawings, wherein show:
Figure 1: A schematic bottom view of an aircraft comprising an energy bay according to a first embodiment of the invention,
Figure 2: A zoom-in on the energy bay of the aircraft already shown in Figure 1, together with six different types of energy modules,
Figure 3: A schematic bottom view of an aircraft according to a second embodiment of the invention, and
Figure 4: A schematic bottom view of an aircraft according to a third embodiment of the invention.

### Description of preferred embodiments

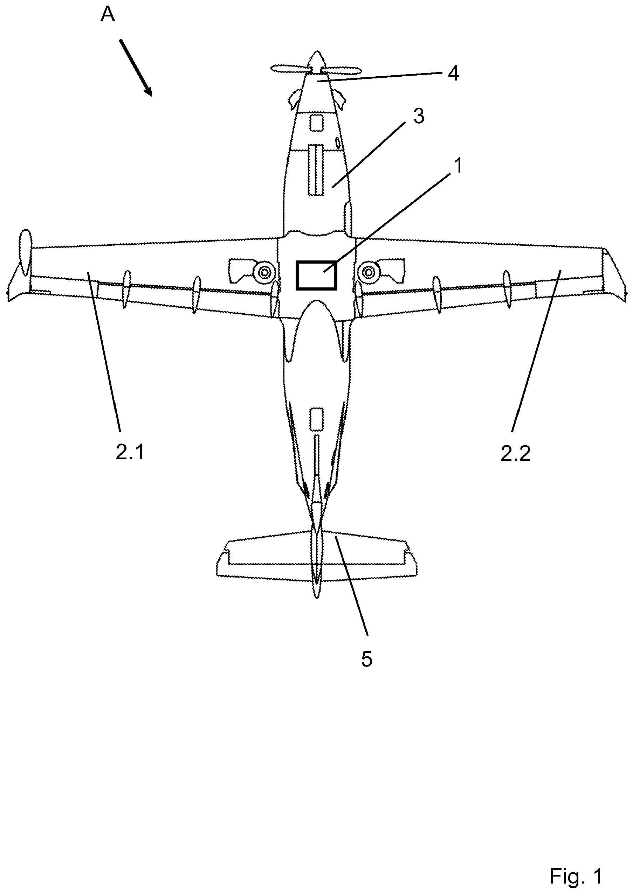

Figure 1 shows a schematic bottom view of an aircraft A according to one preferred embodiment of the invention. The aircraft A is an airplane. The aircraft A comprises two wings 2.1, 2.2 and a fuselage 3. The aircraft A furthermore comprises a bay 1, also referred to as energy bay or conformal energy bay. The bay 1 is arranged in a center of gravity of the aircraft A, in the middle between the two wings 2.1, 2.2 and at the bottom of the fuselage 3. Like this, the bay 1 is accessible from below the aircraft A, when the aircraft A is on the ground. The bay 1 is configured to receive different types of standardized energy modules (not shown in Figure 1). The aircraft A furthermore comprises an engine 4, which is arranged at the very front of the aircraft A. The aircraft A furthermore has a tail 5.

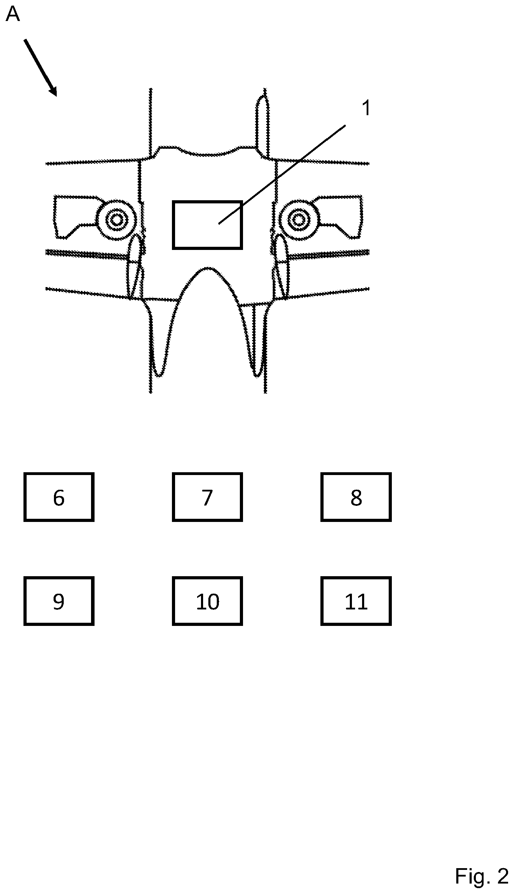

Figure 2 shows a zoom-in on the bay 1 of the aircraft A already shown in Figure 1. Figure 2 furthermore shows a set of different types of energy modules 6, 7, 8, 9, 10, 11. These energy modules 6 to 11 all have the same dimensions and are configured to fit into the bay 1. In other words, the energy modules 6 to 11 form a set of energy modules which are interchangeably insertable into the bay 1 of the aircraft A. In the example shown in Figure 2, the first energy module 6 is a conventional fuel tank, the second energy module 7 is a battery, the third energy module 8 is a fuel tank for a fuel cell, the fourth energy module 9 is a tank for a nano-electrofuel, the fifth energy module 10 is a gas tank and the sixth energy module 11 is a compact energy source.

The energy modules 6 to 11 form an energy module set. The energy module set together with the aircraft A form an aircraft system according to the invention. In such an energy module set, the number of energy modules is not limited to six. In fact, the number of energy modules is theoretically not limited at all. For example, in certain embodiments, the energy module set comprises more than one energy module of at least one energy module type, for example more than one battery 7, more than one conventional fuel tank 6 and/or more than one compact energy source 11. In certain embodiments, the energy module set comprises more than one energy module of all energy module types.

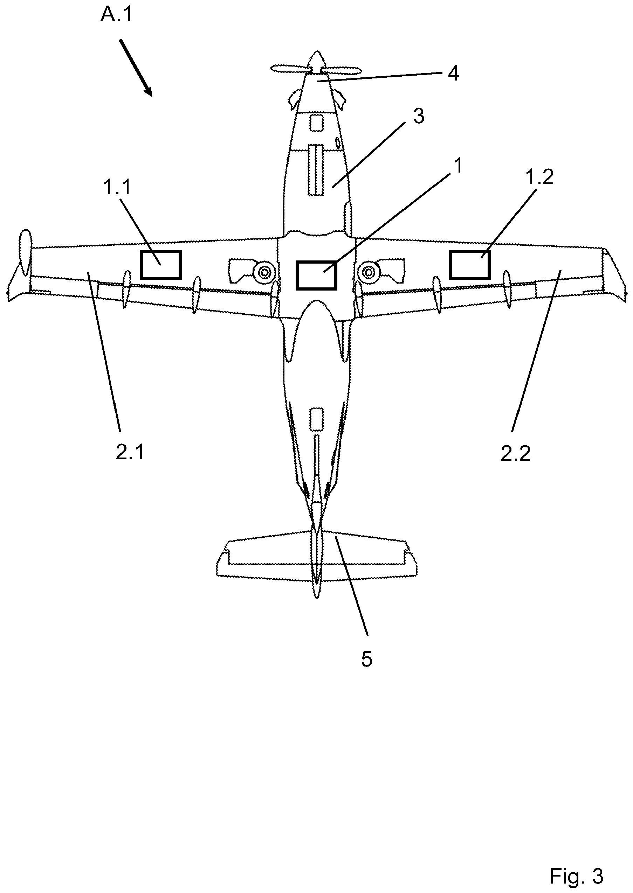

Figure 3 shows a schematic bottom view of an aircraft A.1 according to a second embodiment of the invention. The aircraft A.1 in Figure 3 in principle corresponds to the embodiment already depicted in Figures 1 and 2. The sole difference is that the embodiment shown in Figure 3 comprises two wing-integrated bays 1.1, 1.2, in addition to the fuselage-integrated bay 1 already present in the first embodiment. The wing-integrated bays 1.1, 1.2 typically have the same characteristics as the fuselage-mounted bay 1, for example in terms of dimensions, pressurization, connections for modules and the like. In other words: the technical details given for the fuselage-integrated bay 1 at least partly also apply to the wing-integrated bays 1.1, 1.2. The two wing-integrated bays 1.1, 1.2 are typically symmetrically arranged, in particular around a centre of gravity of the aircraft A.1. The embodiment shown in Figure 3 makes it possible to carry different energy modules at a time and therefore to further improve the flexibility of the aircraft A.1.

Even though the embodiments in Figure 3 only shows one fuselage-mounted bay 1 and only two wing-mounted bays 1.1, 1.2, other embodiments of the invention with additional bays can in principle be designed. For example, in particular embodiments, an aircraft can comprise two, three ore more fuselage-integrated bays and/or two, three or more wing-integrated bays per wing. In such applications with more than three bays, all bays can in principle have the same or at least similar characteristics. It is however also possible that the configurations of the bays differ in such embodiments, for example such that not all bays are configured to receive the same types of energy modules. For example, in particular embodiments, some or all wing-integrated bays can be configured to only carry fuel tanks and/or batteries and/or compact energy sources as energy modules. Furthermore, in particular embodiments, some or all fuselage-integrated bays can be configured to only carry fuel tanks and/or batteries and/or compact energy sources as energy modules.

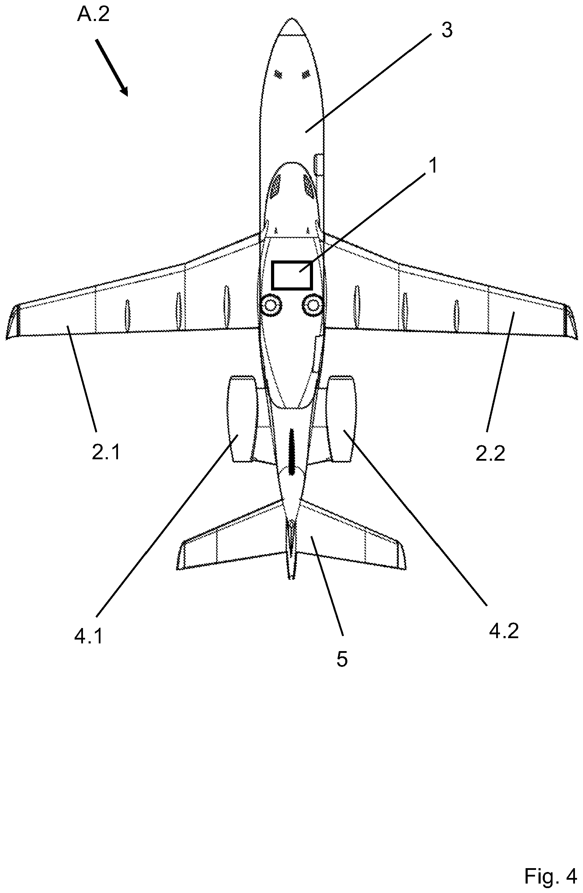

Figure 4 shows a schematic bottom view of an aircraft A.2 according to a third embodiment of the invention. The aircraft A.2 in Figure 4 in principle corresponds to the aircraft A shown in Figures 1 and 2. However, instead of a front-mounted turboprop engine, the aircraft A.2 comprises two rear-mounted engines 4.1, 4.2 which are arranged between the two wings 2.1, 2.2 and the tail 5 of the aircraft A.2.

It goes without saying that the bays 1, 1.1, 1.2 in aircraft A.1, A.2, respectively, of Figures 3 and 4 can be interchangeably equipped with the energy modules 6, 7, 8, 9, 10, 11 depicted in Figure 2. In other words: the explanations given for aircraft A with regard to Figure 2 also apply, mutatis mutandis, to the embodiments shown in Figure 3 and Figure 4.

The functioning of the invention is as follows:
The aircraft A, A.1 and A.2 are each configured in such a way that they can use energy in different forms, for example electric energy and/or chemical energy and/or energy in the form of conventional fuel for satisfying its energy needs. For example, one can imagine that the engines 4 shown in Figures 1 and 3 are hybrid turboprop engines, which are configured such that they can be driven by conventional aircraft fuel, by electric motors or by a combination of both. Likewise, one can imagine that the engines 4.1 and 4.2 shown in Figure 4 are hybrid turbofans, which are configured such that they can be driven by conventional aircraft fuel, by electric motors or by a combination of both. The electric motor(s) themselves can be driven for example by batteries or by electric current produced by fuel cells or flow batteries or the like. This means that the aircraft A, A.1, A.2 have highly flexible energy management systems and are able to be powered by conventional fuel, battery power or any type of gas or liquid that can serve as fuel in a fuel cell or a flow battery for example.

The fact that the aircraft A, A.1, A.2 each comprise one or more bays 1, 1.1, 1.2, which are configured to receive different types of energy modules, has the advantage to even improve the flexibility of the energy management system of the aircraft. The reason for this is that, depending on which mission the aircraft A, A.1, A.2 are supposed to carry out, a particularly convenient aircraft configuration can be chosen by choosing the appropriate energy module or modules to be placed into the bay(s) 1, 1.1, 1.2.

For example, if the aircraft A is supposed to be powered exclusively by means of electric power, for example because the aircraft A is supposed to not produce any exhaust fumes and/or fly as quietly as possible, the second energy module 7, which corresponds to a battery, can be chosen as appropriate energy module and be inserted into bay 1 for this mission. On the other hand, if in another mission the aircraft A is supposed to run as efficiently as possible, the third energy module 8 in the form of a tank for a fuel cell can be chosen. On the other hand, in particular missions where it is foreseeable that the aircraft A is going to a location where only conventional fuel will be available, the first energy module 6, corresponding to a conventional fuel tank, can be placed inside the bay 1, thereby increasing the amount of conventional aircraft fuel that can be charged into the aircraft A.

Likewise, if the aircraft A.1 shown in Figure 3 is supposed to run as long as possible on electric power, all three bays 1, 1.1 and 1.2 can be equipped with three second energy modules 7, which correspond to batteries. On the other hand, if a particularly high flexibility for the aircraft A.1 is desired, it is possible to mount different types of energy modules in the bays 1, 1.1, 1.2, for example a conventional fuel tank 6 in bay 1, a gas tank 10 in bay 1.1 and a tank for a nano-electrofuel 9 in bay 1.2. Another possibility would be to mount a compact energy source 11 in the form of a flow battery system inside the fuselage-integrated bay 1 and one tank for nano-electrofuel 9 in each wing-integrated bay 1.1, 1.2. Various other configurations are possible, and this underlines the great flexibility achieved by the invention.

The invention is not limited to the preferred embodiments described here. The scope of protection is defined by the claims.

### List of reference signs

- 1, 1.1, 1.2: Bays
- 2.1, 2.2: Wings
- 3: Fuselage
- 4. 4.1, 4.2: Engines
- 5: Tail
- 6: First energy module, e. g. conventional fuel tank
- 7: Second energy module, e. g. battery
- 8: Third energy module, e. g. fuel tank for a fuel cell
- 9: Fourth energy module, e. g. tank for nano-electrofuel
- 10: Fifth energy module, e. g. gas tank
- 11: Sixth energy module, e. g. compact energy source

- A, A.1, A.2: Aircraft

## Claims

1. Aircraft system comprising:
- an aircraft (A, A.1, A.2) comprising at least one bay (1, 1.1, 1.2) for receiving different types of standardized modules,
**characterized in that**
- the bay (1, 1.1, 1.2) is configured to receive at least two different types of energy modules (6, 7, 8, 9, 10, 11) as standardized modules, wherein the bay (1, 1.1, 1.2) comprises connection means for connecting one or more interface(s) of the energy modules to an aircraft energy supply system, wherein the bay (1, 1.1, 1.2) is configured to receive all of the different types of energy modules (6, 7, 8, 9, 10, 11) in an interchangeable manner, and
- the aircraft system comprises at least two energy modules (6, 7, 8, 9, 10, 11) configured to be charged into the bay (1, 1.1, 1.2) of the aircraft (A, A.1, A.2), wherein a first energy module of the at least two energy modules (6, 7, 8, 9, 10, 11) comprises a conventional fuel tank and wherein a second energy module of the at least two energy modules (6, 7, 8, 9, 10, 11) comprises a battery.

2. Aircraft system according to claim 1, **characterized in that** additional energy modules (6, 7, 8, 9, 10, 11) are chosen from the following group of energy modules (6, 7, 8, 9, 10, 11): a conventional fuel tank, a battery, a fuel tank for a fuel cell, a tank for electrofuel, a tank for nano-electrofuel, a gas tank and/or a compact energy source.

3. Aircraft system according to any of the previous claims, **characterized in that** the bay (1, 1.1, 1.2) is configured to receive more than two of the different types of energy modules (6, 7, 8, 9, 10, 11) in an interchangeable manner.

4. Aircraft system according to any of the previous claims, **characterized in that** the bay (1, 1.1, 1.2) is configured to receive more than one energy module (6, 7, 8, 9, 10, 11) at a time.

5. Aircraft system according to any of the previous claims, **characterized in that** the bay (1, 1.1, 1.2) is unpressurized.

6. Aircraft system according to any of the previous claims, **characterized in that** at least one bay (1, 1.1, 1.2) is located in and/or arranged around a center of gravity of the aircraft (A, A.1, A.2).

7. Aircraft system according to any of the previous claims, **characterized in that** at least one bay (1.1, 1.2) is arranged at least partly inside a wing (2.1, 2.2) of the aircraft (A, A. 1, A.2).

8. Aircraft system according to any of the previous claims, **characterized in that** the aircraft (A, A.1, A.2) is an airplane, preferably an airplane with a length of less than 40 metres, typically with a length of less than 30 metres, particularly with a length of less than 20 metres.

9. Aircraft system according to any of the previous claims, **characterized in that** the bay (1, 1.1, 1.2) has a volume between 400 liters and 100 liters, preferably between 300 and 200 litres, more preferably of approximately 250 litres.

10. Aircraft system according to any of the previous claims, **characterized in that** the bay (1, 1.1, 1.2) is accessible from the bottom of the aircraft.

11. Aircraft system according to any of the previous claims, **characterized in that** all bays (1, 1.1, 1.2) have essentially the same characteristics.

12. Aircraft system according to claim 2, **characterized in that** one additional energy module is a tank for nano-electrofuel comprising a first reservoir for an anode-nano-electrofuel and a second reservoir for a cathode-nano-electrofuel.

13. Aircraft system according to any of the previous claims, **characterized in that** the aircraft is configured in such a way that it can use energy in different forms for satisfying its energy needs.

14. Aircraft system according to any of the previous claims, **characterized in that** the aircraft comprises: a hybrid turboprop engine (4) or two hybrid turbofans (4.1, 4.2).

## Patentansprüche

1. Luftfahrzeugsystem, umfassend:
- ein Luftfahrzeug (A, A.1, A.2), umfassend mindestens einen Schacht (1, 1.1, 1.2) zum Aufnehmen von unterschiedlichen Typen von standardisierten Modulen,
**dadurch gekennzeichnet, dass**
- der Schacht (1, 1.1, 1.2) konfiguriert ist, um mindestens zwei unterschiedliche Typen von Energiemodulen (6, 7, 8, 9, 10, 11) als standardisierte Module aufzunehmen, wobei der Schacht (1, 1.1, 1.2) Anschlussmittel zum Anschliessen einer oder mehrerer Schnittstelle(n) der Energiemodule an ein Luftfahrzeug-Energieversorgungssystem umfasst, wobei der Schacht (1, 1.1, 1.2) konfiguriert ist, um alle der unterschiedlichen Typen von Energiemodulen (6, 7, 8, 9, 10, 11) in austauschbarer Weise aufzunehmen, und
- das Luftfahrzeugsystem mindestens zwei Energiemodule (6, 7, 8, 9, 10, 11), umfasst, welche konfiguriert sind, um in den Schacht (1, 1.1, 1.2) des Luftfahrzeugs (A, A.1, A.2) eingesetzt zu werden, wobei ein erstes Energiemodul der mindestens zwei Energiemodule (6, 7, 8, 9, 10, 11) einen konventionellen Treibstofftank umfasst und wobei ein zweites Energiemodul der mindestens zwei Energiemodule (6, 7, 8, 9, 10, 11) eine Batterie umfasst.

2. Luftfahrzeugsystem nach Anspruch 1, **dadurch gekennzeichnet, dass** zusätzliche Energiemodule (6, 7, 8, 9, 10, 11) aus der folgenden Gruppe von Energiemodulen (6, 7, 8, 9, 10, 11) ausgewählt werden: ein konventioneller Treibstofftank, eine Batterie, ein Treibstofftank für eine Brennstoffzelle, ein Tank für E-Fuel, ein Tank für Nano-E-Fuel, ein Gastank und/oder eine kompakte Energiequelle.

3. Luftfahrzeugsystem nach einem der vorhergehenden Ansprüche, **dadurch gekennzeichnet, dass** der Schacht (1, 1.1, 1.2) konfiguriert ist, um mehr als zwei der unterschiedlichen Typen von Energiemodulen (6, 7, 8, 9, 10, 11) in austauschbarer Weise aufzunehmen.

4. Luftfahrzeugsystem nach einem der vorhergehenden Ansprüche, **dadurch gekennzeichnet, dass** der Schacht (1, 1.1, 1.2) konfiguriert ist, um gleichzeitig mehr als ein Energiemodul (6, 7, 8, 9, 10, 11) aufzunehmen.

5. Luftfahrzeugsystem nach einem der vorhergehenden Ansprüche, **dadurch gekennzeichnet, dass** der Schacht (1, 1.1, 1.2) nicht druckbeaufschlagt ist.

6. Luftfahrzeugsystem nach einem der vorhergehenden Ansprüche, **dadurch gekennzeichnet, dass** sich zumindest ein Schacht (1, 1.1, 1.2) in einem Schwerpunkt des Luftfahrzeugs (A, A.1, A.2) befindet und/oder darum herum angeordnet ist.

7. Luftfahrzeugsystem nach einem der vorhergehenden Ansprüche, **dadurch gekennzeichnet, dass** zumindest ein Schacht (1.1, 1.2) zumindest teilweise innerhalb eines Flügels (2.1, 2.2) des Luftfahrzeugs (A, A.1, A.2) angeordnet ist.

8. Luftfahrzeugsystem nach einem der vorhergehenden Ansprüche, **dadurch gekennzeichnet, dass** das Luftfahrzeug (A, A.1, A.2) ein Flugzeug ist, vorzugsweise ein Flugzeug mit einer Länge von weniger als 40 Metern, typischerweise mit einer Länge von weniger als 30 Metern, insbesondere mit einer Länge von weniger als 20 Metern.

9. Luftfahrzeugsystem nach einem der vorhergehenden Ansprüche, **dadurch gekennzeichnet, dass** der Schacht (1, 1.1, 1.2) ein Volumen zwischen 400 Litern und 100 Litern, bevorzugt zwischen 300 und 200 Litern, mehr bevorzugt von ungefähr 250 Litern hat.

10. Luftfahrzeugsystem nach einem der vorhergehenden Ansprüche, **dadurch gekennzeichnet, dass** der Schacht (1, 1.1, 1.2) von der Unterseite des Flugzeugs her zugänglich ist.

11. Luftfahrzeugsystem nach einem der vorhergehenden Ansprüche, **dadurch gekennzeichnet, dass** alle Schächte (1, 1.1, 1.2) im Wesentlichen die gleichen Merkmale haben.

12. Luftfahrzeugsystem nach Anspruch 2, **dadurch gekennzeichnet, dass** ein zusätzliches Energiemodul ein Tank für Nano-E-Fuel ist, welcher einen ersten Behälter für einen Anoden-Nano-E-Fuel und einen zweiten Behälter für einen Kathoden-Nano-E-Fuel umfasst.

13. Luftfahrzeugsystem nach einem der vorhergehenden Ansprüche, **dadurch gekennzeichnet, dass** das Luftfahrzeug derart konfiguriert ist, dass es Energie in unterschiedlichen Formen zur Deckung seines Energiebedarfs benutzen kann.

14. Luftfahrzeugsystem nach einem der vorhergehenden Ansprüche, **dadurch gekennzeichnet, dass** das Luftfahrzeug einen hybriden Turboprop-Motor (4) oder zwei hybride Turbofan-Triebwerke (4.1, 4.2) hat.

## Revendications

1. Système aéronautique comprenant :
- un aéronef (A, A.1, A.2) comprenant au moins une baie (1, 1.1, 1.2) pour recevoir différents types de modules standardisés,
**caractérisé en ce que**
- la baie (1, 1.1, 1.2) est configurée pour recevoir au moins deux types différents de modules énergétiques (6, 7, 8, 9, 10, 11) en tant que modules standardisés, où la baie (1, 1.1, 1.2) comprend des moyens de connexion pour connecter une ou plusieurs interface(s) des modules énergétiques à un système d'alimentation en énergie d'aéronef, la baie (1, 1.1, 1.2) étant configurée pour recevoir tous les différents types de modules énergétiques (6, 7, 8, 9, 10, 11) de manière interchangeable, et
- le système aéronautique comprend au moins deux modules énergétiques (6, 7, 8, 9, 10, 11) configurés pour être chargés dans la baie (1, 1.1, 1.2) de l'aéronef (A, A.1, A.2), où un premier module énergétique parmi les au moins deux modules énergétiques (6, 7, 8, 9, 10, 11) comprend un réservoir de carburant conventionnel et où un deuxième module énergétique parmi les au moins deux modules énergétiques (6, 7, 8, 9, 10, 11) comprend une batterie.

2. Système aéronautique selon la revendication 1, **caractérisé en ce que** des modules énergétiques additionnels (6, 7, 8, 9, 10, 11) sont choisis parmi le groupe de modules énergétiques suivant (6, 7, 8, 9, 10, 11): un réservoir de carburant conventionnel, une batterie, un réservoir de carburant pour une pile à combustible, un réservoir pour électrocarburant, un réservoir pour nano-électrocarburant, un réservoir à gaz et/ou une source d'énergie compacte.

3. Système aéronautique selon l'une quelconque des revendications précédentes, **caractérisé en ce que** la baie (1, 1.1, 1.2) est configurée pour recevoir plus de deux parmi les différents types de modules énergétiques (6, 7, 8, 9, 10, 11) de manière interchangeable.

4. Système aéronautique selon l'une quelconque des revendications précédentes, **caractérisé en ce que** la baie (1, 1.1, 1.2) est configurée pour recevoir plus d'un module énergétique (6, 7, 8, 9, 10, 11) à la fois.

5. Système aéronautique selon l'une quelconque des revendications précédentes, **caractérisé en ce que** la baie (1, 1.1, 1.2) est non-pressurisée.

6. Système aéronautique selon l'une quelconque des revendications précédentes, **caractérisé en ce qu'**au moins une baie (1, 1 .1, 1 .2) est située dans et/ou arrangée autour d'un centre de gravité de l'aéronef (A, A.1, A.2).

7. Système aéronautique selon l'une quelconque des revendications précédentes, **caractérisé en ce qu'**au moins une baie (1.1, 1.2) est arrangée au moins en partie à l'intérieur d'une aile (2.1, 2.2) de l'aéronef (A, A.1, A.2).

8. Système aéronautique selon l'une quelconque des revendications précédentes, **caractérisé en ce que** l'aéronef (A, A.1, A.2) est un avion, de préférence un avion d'une longueur inférieure à 40 mètres, typiquement d'une longueur inférieure à 30 mètres, en particulier d'une longueur inférieure à 20 mètres.

9. Système aéronautique selon l'une quelconque des revendications précédentes, **caractérisé en ce que** la baie (1, 1.1 ,1.2) a un volume compris entre 400 litres et 100 litres, de préférence entre 300 et 200 litres, plus préférablement d'environ 250 litres.

10. Système aéronautique selon l'une quelconque des revendications précédentes, **caractérisé en ce que** la baie (1, 1.1, 1.2) est accessible depuis le bas de l'aéronef.

11. Système aéronautique selon l'une quelconque des revendications précédentes, **caractérisé en ce que** toutes les baies (1, 1.1, 1.2) ont essentiellement les mêmes caractéristiques.

12. Système aéronautique selon la revendication 2, **caractérisé en ce qu'**un module énergétique additionnel est un réservoir pour nano-électrocarburant qui comprend un premier réservoir pour un anode-nano-électrocarburant et un deuxième réservoir pour un cathode-nano-électrocarburant.

13. Système aéronautique selon l'une quelconque des revendications précédentes, **caractérisé en ce que** l'aéronef est configuré de telle manière qu'il peut utiliser de l'énergie sous différentes formes pour satisfaire ses besoins énergétiques.

14. Système aéronautique selon l'une quelconque des revendications précédentes, **caractérisé en ce que** l'aéronef comprend: un turbopropulseur hybride (4) ou deux turboréacteurs hybrides (4.1, 4.2).
